# EUROPÄISCHE PATENTSCHRIFT

(11) **EP 2 164 672 B1**
(45) Veröffentlichungstag und Bekanntmachung des Hinweises auf die Patenterteilung: **06.05.2015**
(21) Anmeldenummer: 08773453.9
(22) Anmeldetag: 16.06.2008
(51) Int. Cl.: B23K 26/03, B23K 37/04, B23K 26/08

(54) **VERFAHREN ZUR DETEKTION VON EINEM PROZESSLICHT WÄHREND EINES TRENNVORGANGES IM PLATTENFÖRMIGEN MATERIAL SOWIE VORRICHTUNG ZUR DURCHFÜHRUNG DES VERFAHRENS**
METHOD FOR DETECTING A PROCESS LIGHT DURING A SEPARATION PROCESS IN SHEET MATERIAL AND DEVICE FOR CARRYING OUT THE METHOD
PROCÉDÉ DE DÉTECTION D'UNE LUMIÈRE DE PROCESSUS AU COURS D'UNE OPÉRATION DE SÉPARATION D'UN MATÉRIAU SOUS FORME DE PLAQUE ET DISPOSITIF POUR LA MISE EN OEUVRE DUDIT PROCÉDÉ

(30) Priorität: 14.06.2007 DE 102007027987
(43) Veröffentlichungstag der Anmeldung: 24.03.2010
(73) Patentinhaber: TRUMPF Werkzeugmaschinen GmbH + Co. KG, 71254 Ditzingen (DE)
(72) Erfinder: WAHL, Eberhard, 73235 Weilheim (DE); BLASER, Martin, 88267 Vogt (DE); STÜCKEL, Markus, 71254 Ditzingen (DE); SZELAGOWSKI, Arnd, 73230 Kirchheim u.T. (DE); HOHENADEL, Jürgen, 71701 Schwieberdingen (DE); MIENHARDT, Uwe, 70825 Korntal-Münchingen (DE)
(74) Vertreter: Maser, Jochen
(86) Internationale Anmeldenummer: PCT/EP2008/004818
(87) Internationale Veröffentlichungsnummer: WO 2008/151838

(56) Entgegenhaltungen:
- JP-A- 63 108 980
- JP-A- 2001 138 082
- JP-A- 2002 210 574
- JP-A- 2006 315 033

## Beschreibung

Die Erfindung betrifft ein Verfahren zur Detektion von einem Prozesslicht während eines Trennvorganges im plattenförmigen Material, der mit einem Schneidstrahl einer Trenneinrichtung erzeugt wird sowie eine Vorrichtung zur Durchführung des Verfahrens.

Aus der JP 04-017987 A1 ist ein Bilderkennungssystem für eine Laserschneidmaschine bekannt geworden. Bei dieser Laserschneidmaschine wird ein plattenförmiges Werkstück durch eine Werkstückaufnahme gehalten, welche an einer Positioniervorrichtung vorgesehen ist, die in X- und Y-Richtung zum Verschieben des plattenförmigen Materials innerhalb einer horizontalen Ebene verfahren wird. Oberhalb des plattenförmigen Materials ist eine Trenneinrichtung zur Bearbeitung des plattenförmigen Materials mit einem Schneidstrahl vorgesehen. Zur Herstellung eines Werkstückes durch das plattenförmige Material in X- und Y-Richtung durch die Positioniereinrichtung verfahren wird. Unterhalb des plattenförmigen Materials ist eine CCD-Kamera vorgesehen, welche auf die Trenr einrichtung zugerichtet ist beziehungsweise auf den durch die Trenneinrichtung gebildeten Schneidspalt, so dass von einem an der Unterseite ces plattenförmigen Materials austretenden Schneidstrahl bzw. dem dadurch erzeugten Prozesslicht Aufnahmen erstellt werden. Diese erstellten Bilder des austretenden Schneidstrahles werden ausgewertet. Bei guter Schneidbedingungen, die anhand der erstellten Bilder beurteilt werden, wird der Arbeitsprozess fortgesetzt. Sofern eine Verschlechterung des Schneidprozesses eingetreten ist, der unterhalb einer festgelegten Grenze liegt, wird das Schneidverfahren unterbrochen.

Durch die Positioniereinrichtung der Laserschneidmaschine, welche das Werkstück in X- und/oder Y-Richtung verfährt, ist die Trenneinrichtung stationär angeordnet. Dadurch ist ermöglicht, dass die unterhalb des plattenförmigen Materials angeordnete CCD-Kamera stationär vorgesehen ist, um eine Prozessüberwachung durchzuführen. Diese Anordnung und Durchführung der Prozessüberwachung ist nur bei Laserschneidmaschinen möglich, welche das Werkstück während der Bearbeitung verfahren, so dass der Bearbeitungsort gleich bleibt. Eine Prozessüberwachung be Laserschneidmaschinen mit ruhendem plattenförmigem Werkstück während dem Schneldprozess ist durch die vorstehende Anordnung mit einer feststehenden CCD-Kamera nicht möglich. Eine analoge Anordnur g ist aus der JP 2001-138082 A und der JP 63-108980 A bekannt.

Der Erfindung liegt deshalb die Aufgabe zugrunde, ein Verfahren zur Detektion von einem Prozesslicht während eines Trennvorganges im plattenförmicen Material sowie eine Vorrichtung zur Durchführung des Verfahrens zu schaffen, welche während einer Bearbeitung des ruhenden plattenförmigen Materials in einer Bearbeitungsmaschine eine sichere Prozessüberwachung des Trennvorganges ermöglicht.

Diese Aufgabe wird erfindungsgemäß durch ein Verfahren gemäß den Merkmalen des Anspruchs 1 gelöst. Weitere vorteilhafte Ausgestaltungen sind in den darauf rückbezogenen Ansprüchen angegeben.

Durch das erfindungsgemäße Verfahren wird ermöglicht, dass in ein ruhendes plattenförmiges Material ein Schneldspalt mit einem Schneidstrahl durch eine Trennvorrichtung eingebracht wird, welche während des Trennvorganges in X- und/oder Y-Richtung verfahren wird, wobei der Trennvorrichtung eine Strahlfangvorrichtung unterhalb des plattenförmigen Materials zugeordnet wird und eine Detektionsvorrichtung aufnimmt, so dass die Strahlfangvorrichtung zumindest in X-Richtung gemeinsam mit der Trennvorrichtung verfahren wird, und eine die sich verändernde Position des Schneidstrahles und demzufolge des nach unten austretenden Prozesslichtes durch Aktivierung der Detektionsvorrichtung erfasst wird. Diese Aktivierung kann eine mit einem Schneidkopf der Trenneinrichtung gekoppelte Verfahrbewegung der Detektionsvorrichtung umfassen als auch eine partielle Ansteuerung einer stationären Detektionsvorrichtung, um zu ermöglichen, dass die sich verändernde Position des aus der Unterseite des plattenförmigen Materials austretenden Prozesslichtes erfasst und ausgewertet wird.

Die Detektionsvorrichtung wird gleichzeitig mit der Trennvorrichtung verfahren, so dass ein zwangsweises Nachführen der Detektionsvorrichtung zurr Prozesslicht erfolgt.

Vorzugsweise kann dadurch der Abstand zwischen der Detektionsvorrichtung und dem Schneidstrahl und somit dem aus der Unterseite des plattenförmigen Materials austretenden Prozesslichtes konstant gehalten werden, wodurch gleichmäßige Arbeitsbedingungen zur Erfassung des Prozesslichtes ermöglicht werden. Diese Strahlfangvorrichtung kann beispielsweise als sogenannter Linien-Catcher ausgebildet sein, der sich beispielsweise entlang der gesamten Breite der Werkstückauflage in Y-Richtung erstreckt.

Nach einer weiteren bevorzugt Ausgestaltung des Verfahrens ist vorgesehen, dass die Strahlfangvorrichtung sich nur teilweise in Y-Richtung zur Werkstückauflage erstreckt und gemeinsam mit der Trennvorrichtung in Y-Richtung verfahren wird. Eine solche Strahlfangvorrichtung, die kleiner als die Breite der Werkstückauflage ausgebildet ist, kann auch als sogenannter Punkt-Catcher bezeichnet werden und ermöglicht eine nahe bzw. direkte Positionierung der Detektionsvorrichtung zum Prozesslicht.

Die Erfassung des Prozesslichtes wird bevorzugt durch eine Detektionsvorrichtung mit zumindest einem Sensorelement durchgeführt, welche zur Erfassung des Prozesslichtes in eine auf die Unterseite weisende Position ausgerichtet wird. Durch das zumindest eine Sensorelement kann eine Helligkeitsänderung erfasst werden. Diese Helligkeitsänderung ermöglicht bereits eine erste Aussage darüber, ob der Schneidstrahl das plattenförmige Material vollständig durchtrennt hat oder ob eine Störung während des Trennvorganges vorliegt. Bei einem vollständigen Fehlschnitt entsteht kein Prozesslicht, so dass das Sensorelement kein Signal erfasst und somit einen Fehler im Bearbeitungsprozess erkannt und ein entsprechendes Signal an die Steuerung der Bearbeitungsmaschine ausgegeben wird. Sofern ein Prozesslicht unterhalb eines bestimmten Schwellwertes erfasst wird, liegt zwar kein vollständiger Fehlschnitt vor, jedoch eine schlechte Schnittqualität, so dass auch diese noch als Fehlschnitt erfasst wird. Das Sensorelement kann bevorzugt gemäß einer ersten Ausführungsform als Fotodiode ausgebildet sein, welche unmittelbar das an der Unterseite der Bearbeitungsstelle aus dem plattenförmigen Material austretende Prozesslicht erfasst. Nach einer weiteren vorteilhaften Ausgestaltung des Sensorelementes kann vorgesehen sein, dass das Sensorelement aus einem optischen Lichtleitelement mit zumindest einer entfernt dazu angeordneten Fotodiode, einer CCD-Kamera oder einer weiteren optischen Erfassungseinrichtung besteht. Eine weitere alternative Ausführungsform des Sensorelementes kann darin bestehen, dass eine oder mehrere CCD-Kameras vorgesehen sind, die unterhalb des plattenförmigen Materials zur Erfassung des Prozesslichtes angeordnet sind.

Durch die Detektion des Prozesslichtes während des Trennvorganges im plattenförmigen Material zur Herstellung von Werkstücken wird eine Detektionsvorrichtung mit zumindest zwei einander gegenüberliegenden Sensorelumenten eingesetzt, die derart zur Unterseite des plattenförmigen Materials ausgerichtet werden, dass die jeweiligen Erfassungskegel der Sensorelemente aneinandergrenzen oder einen Überlappungsbereich bilden. Dadurch wird das Prozesslicht von zwei Seiten erfasst, wodurch die Sicherheit einer Fehlschnitterkennung erhöht wird. Durch diese zwei einander gegenüberliegenden Sensorelemente können Veränderungen im Abstand zum Prozesslicht von dem einen Sensorelement durch das andere Sensorelement kompensiert werden.

Nach einer weiteren bevorzugten Ausgestaltung des Verfahrens ist vorgesehen, dass die Detektionsvorrichtung durch mehrere in einer Reihe angeordneten und durch zwei einander gegenüberliegenden Reihen von Sensorelementen ausgebildet wird und vorzugsweise durch jede Reihe wenigstens eine Hälfte der Unterseite vom Erfassungskegel der Sensorelemente erfasst wird. Durch zwei oder mehrere in Reihe nebeneinander angeordnete Sensorelemente kann gegenüber einem linienförmigen Detektionsfeld, welche durch zwei einzelne einander gegenüberliegende Sensorelemente gebildet ist, ein flächenförmiges Detektionsfeld geschaffen werden, so dass ein vergrößerter Überwachungsbereich um den Schneidspalt überwacht werden kann. Die einander gegenüberliegenden Sensorelemente sind dabei in deren Winkelposition zur Unterseite des plattenftrmigen Material derart ausgerichtet, so dass zumindest die Hälfte des plattenförmigen Materials durch den Erfassungskegel abgedeckt wird. Somit kann ein sehr breites plattenförmiges Werkstück sicher überwacht werden.

Nach einer weiteren bevorzugten Ausgestaltung des Verfahrens ist vorgesehen dass eine Reihe von Sensorelementen um einen halben Abstand des Sensorelementes versetzt zur gegenüberliegenden Reihe von Sensorelementen angeordnet ist. Dadurch ist ermöglicht, dass ein hoher Überdeckungsgrad der Erfassungskegel der Sensorelemente gegeben ist, so dass das Prozesslicht nahe zu dem gesamten Detektionsfeld von wenigstens zwei Sensorelementen erfasst wird. Eine solche Anordnung ist bevorzugt beim Einsatz einer Strahlfangvorrichtung, insbesondere einem Punkt-Catcher, vorgesehen, wobei die Reihen der einander gegenüberliegenden Sensorelemente bevorzugt in X-Richtung ausgerichtet sind.

Eine weitere bevorzugte Ausgestaltung des Verfahrens sieht vor, dass bei stationär angeordneten Sensorelementen, die entlang der Werkzeugauflage in X-Richtung sich erstrecken und an die Werkstückauflage angrenzen oder außerhalb der Werkstückauflage vorgesehen sind, alle Sensorelemente aktiviert werden oder eine bestimmte Anzahl von einander gegenüberliegenden Sensorelementen aktiviert werden, in dessen Bereich sich die Trennvorrichtung befindet. Insbesondere die Aktivierung und Ansteuerung einer vorbestimmten Anzahl von Sensorelementen, in dessen Bereich die Trennvorrichtung liegt, ermöglicht, dass durch ein quasi streifenförmiges Detektionsfeld das Prozesslicht erfasst wird. Die weiteren Sensorelemente sind zu diesem Zeitpunkt deaktiviert.

Nach einer weiteren bevorzugten Ausgestaltung des Verfahrens ist vorgesehen, dass mit dem Beginn oder während eines Prozessschrittes zum Einstechen des Schneidstrahls in das plattenförmige Material das zumindest eine Sensorelement der Detektionsvorrichtung aktiviert wird und bei einen erstmaligen Erfassen eines Prozesslichtes auf der Unterseite des plattenförmigen Materials das Ende des Prozessschrittes Einstechen detektiert wird. Diese Detektion kann durch eine Auswerteeinrichtung erfolgen, welche das erfasste Prozesslicht auswertet. Die Auswerteeinrichtung ist bevorzugt eine Komponente der Detektionsvorrichtung. Somit kann ein nahtloser Übergang vom Ende des Einstechprozesses zur Fehlschnitterkennung während der Herstellung von Werkstücken aus dem plattenförmigen Material hergestellt werden. Alternativ kann vorgesehen sein, dass die Detektionsvorrichtung nach einem vorbestimmten Zeitintervall aktiviert wird, nachdem der Prozessschritt zum Einstechen des Schneidstrahls in das plattenförmige Material gestartet wurde.

Des Weiteren ist bevorzugt vorgesehen, dass von dem aus der Unterseite des plattenförmigen Materials austretenden Prozesslicht Signale oder Helligkeitswerte erfasst und ausgewertet werden und bei nicht austretendem Prozesslicht oder einem Unterschreiten eines Schwellwertes von dem austretenden Prozesslicht eine Fehlermeldung ausgegeben wird. Dadurch kann bereits durch die Erfassung der Helligkeitsänderung eine Aussage über eine Störung getroffen werden.

Nach einer weiteren bevorzugten Ausgestaltung des Verfahrens ist vorgesehen, dass während des Schneidprozesses zur Herstellung von Werkstücken aus dem plattenförmigem Material das auf der Unterseite austretende Prozesslicht detektiert und eine Intensität und/oder ein zeitlicher Verlauf des detektierten Prozesslichtes ausgewertet wird. Dadurch können von dem erfassten Prozesslicht weitere Informationen über die aktuellen Schneidparameter und der Schneidqualität des Schneidspaltes abgeleitet werden.

Nach einer weiteren bevorzugten Ausgestaltung des Verfahrens ist vorgesehen, dass die durch die Auswerteeinrichtung ermittelten Signale an eine Steuerung der Bearbeitungsmaschine zur Prozessregelung weitergeleitet werden. Durch die Erfassung des Prozesslichtes und der daraus sich ableitenden Signale, die durch die Auswerteeinheit ermittelt werden, kann eine unmittelbare Überwachung der Bearbeitungsstelle erfolgen. Somit können bereits geringe Abweichungen von einem optimalen Bearbeitungszustand umfasst werden, wodurch aufgrund der Prozessregelung unmittelbar in den Schneidprozess eingegriffen wird. Dabei kann beispielsweise die Leistung des Schneidstrahles, insbesondere des Laserstrahles, als auch die Bearbeitungsgeschwindigkeit beziehungsweise die Verfahrgeschwindigkeit eines Schneidkopfes zur Führung des Schneidstrahles ::ur Bearbeitungsstelle angesteuert werden. Die Veränderung der Arbeitsbedingungen während dem Schneidprozess kann aus dem Prozesslicht durch Helligkeitsänderungen oder durch Formänderungen des Lithtkegels und/oder durch Änderungen im Funkenflug erkannt werden.

Bei der bevorzugten Ausführungsform des Verfahrens, wonach die Detektionsvorrichtung gleichzeitig mit der Trennvorrichtung zumindest in X-Richtung verfahren wird, ist bevorzugt vorgesehen, dass während des Verfahrgangweges in X-Richtung Helligkeitsänderungen aufgrund von Auflagestegen der Werkstückauflage erfasst und bei der Auswertung eliminiert werden. Dadurch kann eine Fehlinterpretation bei einem plötzlichen Abfall des Signals daraufhin geprüft werden, ob dieses aufgrund der Positionierung eines Auflagesteges erfolgt ist oder ob tatsächlich ein Fehlschnitt vorliegt. Die Position der Auflagestege ist definiert und bekannt, so dass eine sichere Auswertung ermöglicht wird.

Die der Erfindung zugrundeliegende Aufgabe wird erfindungsgemäß durch eine Vorrichtung zur Durchführung des vorstehenden Verfahrens, gelöst, bei der die Trennvorrichtung zumindest in X-Richtung verfahrbar ist und bei der die die an der Strahlfangvorrichtung angeordneten Detektionsvorrichtung entsprechend zur Trenneinrichtung verfahrbar oder aktivierbar ist. Diese Vorrichtung ermöglicht die Aufnahme von großen und schweren als auch mehreren plattenförmigen Materialien gleichzeitig auf einer Werkstückauflage. Dadurch ist eine rationelle Bearbeitung von solchen plattenförmigen Materialien bei gleichzeitiger Prozessüberwachung ermöglicht. Durch die fahrbare Anordnung der Trenneinrichtung und einer daran angepassten Positionierung der Detektionsvorrichtung beziehungsweise Aktivierung der Detektionsvorrichtung wird eine sichere Fehlschnitterkennung während der Herstellung von Werkstücken aus dem zumindest einen plattenförmigen Material ermöglicht.

Die Erfindung sowie weitere vorteilhafte Ausführungsformen und Weiterbindungen derselben werden im Folgenden anhand der in den Zeichnungen dargestellten Beispiele näher beschrieben und erläutert. Die der Beschreibund und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht einer erfindungsgemäßen Vorrichtung zur Bearbeitung von plattenförmigern Material,
- Figur 2: eine perspektivische Ansicht einer Vorrichtung, die nicht unter den Wortlaut der Ansprüche fällt.
- Figur 3: eine perspektivische Ansicht einer Vorrichtung, die nicht unter den Wortlaut der Ansprüche fällt.
- Figur 4: eine schematisch vergrößerte Ansicht einer Detektionsvorrichtung.

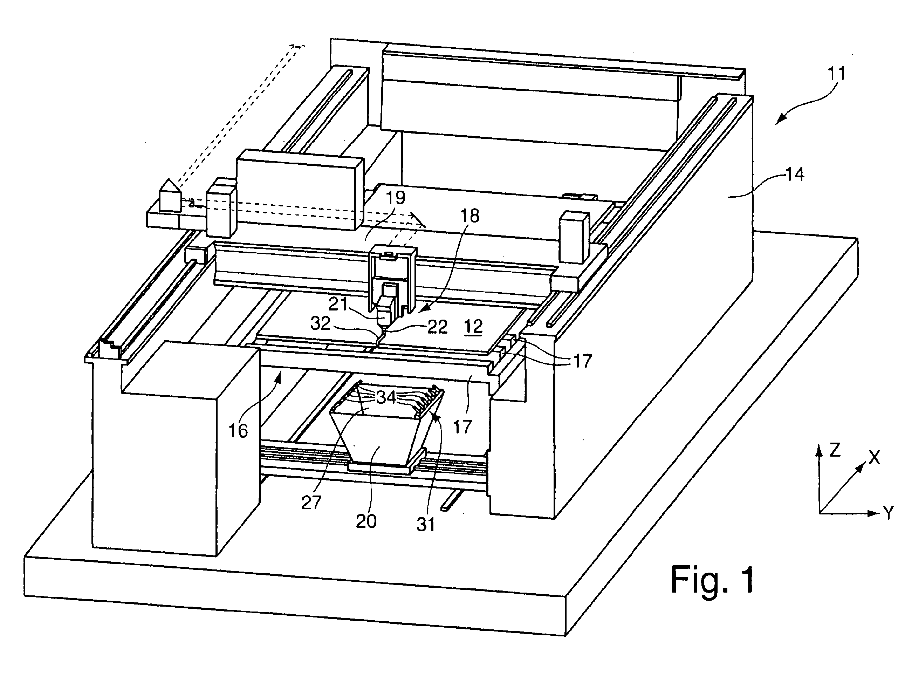

In Figur 1 ist eine perspektivische Ansicht einer Vorrichtung 11 zum Bearbeiten eines plattenförmigen Materials 12 vorgesehen. Die Vorrichtung 11 umfasst ein Grundgestell 14, welches eine Werkstückauflage 16 aufnimmt. Diese Werkstückauflage 16 kann beispielsweise aus mehreren nebeneir ander angeordneten Auflagestegen 17 ausgebildet sein, welche Insbesondere auswechselbar angeordnet sind. Oberhalb der WerkstUckauflage 16 ist eine Trenneinrichtung 18 am Grundgestell 14 vorgesehen, welche entlang dem Grundgestell 14 in X-Richtung verfahrbar ist. Diese Trenneinrichtung 18 umfasst eine Linearachse 19, die in Y-Richtung ausgerichtet und am Grundgestell 14 in X-Richtung verfahrbar aufgenommen ist. An der Linearachse 19 ist in Y-Richtung verfahrbar ein Schneidkopf 21 angeordnet. Über diesen Schneidkopf 21 wird ein Schneidstrahl 22 auf zumindest ein auf der Werkstückauflage 16 aufliegendes plattenförmiges Material 12 gerichtet. Durch die Anordnung der Linearachse 19 und der Aufnahme des Schneidkopfes 21 wird eine sogenannte fliegende Optik gebildet. Dieser Schneidkopf 21 ist beliebig in X- und Y-Richtung oberhalb der Werkstückauflage 16 verfahrbar. Zusätzlich kann der Schneidkopf 21 noch in Z-Richtung verfahrbar an der Linearachse 19 aufgenommen sein. Bei der in Figur 1 dargestellten Vorrichtung 11 handelt es sich beispielsweise um eine Laserschneidmaschine, insbesondere eine sogenannte Flachbettbearbeitungsmaschine, bei der ein Laserstrahl zur Herstellung von Werkstücken aus dem plattenförmigen Material 12 eingesetzt wird.

Unterhalb der Werkstückauflage 16 ist eine Strahlfangvorrichtung 26 vorgesehen, welche behälter- oder gehäuseförmig ausgebildet ist und eine Öffnung 27 aufweist, die zur Unterseite des plattenförmigen Materials 12 hin ausgerichtet ist. Die Strahlfangvorrichtung 26 ist gemäß dem Ausführungsbeispiel in Figur 1 in der Größe derart ausgebildet, dass ein auf der Unterseite des plattenförmigen Materials 12 austretender Schneidstrahl 22 sicher aufgefangen werden kann. Dabei ist die Öffnung 27 derart bemessen, dass ein sich aufweitender Schneidstrahl 22 nach dem Austreten aus der Unterseite des plattenförmigen Materials 12 sicher aufgefangen werden kann. Während dem Austreten des Schneidstrahles 22 aus der Unterseite des plattenförmigen Materials 12 ergibt sich ein Prozesslicht. Dieses Prozesslicht wird durch eine Detektionsvorrichtung 31 erfasst, welche auf die Unterseite des plattenförmigen Materials 12 zum Schneidspalt 32 ausgerichtet und an der Strahlfangvorrichtung 26 angeordnet ist. Insbesondere ist die Detektionsvorrichtung 31 nahe zur Unterseite des plattenförmigen Materials 12 an der Strahlfangvorrichtung 26 positioniert.

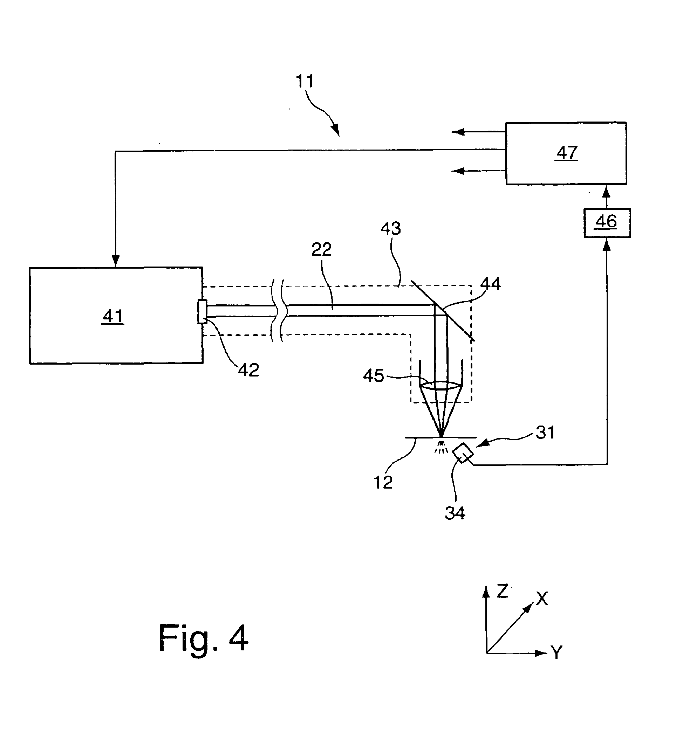

Die Detektionsvorrichtung 31 umfasst zumindest ein Sensorelement 34. Bei der in Figur 1 dargestellten Ausführungsform ist das Sensorelement 34 als helligkeitsempfindliches elektronisches Bauteil, insbesondere als Fotodiode, ausgebildet. Alternativ kann vorgesehen sein, dass das Sensorelement 34 auch als CCD-Kamera oder durch weitere Arten von helligkeitsempfindlichen Bauteilen ausgebildet ist. Eine weitere alternative Ausgestaltung des Sensorelementes 34 wird nachfolgend noch in Figur 4 näher beschrieben.

Im vorliegenden Ausführungsbeispiel ist eine erste Reihe von Sensorelementen 34 vorgesehen, die einer zweiten Reihe von Sensorelementen 34 gegenüberliegend angeordnet ist. Beide Reihen an Sensorelementen 34 sind an oder in der Strahlfangvorrichtung 26 in der Weise vorgesehen, dass diese auf die Unterseite zum Schneidspalt 32 ausgerichtet sind. Bevorzugt ist die Reihe der Sensorelemente 34 in X-Richtung ausgerichtet. Alternativ kann diese auch in Y-Richtung ausgerichtet werden. Sofern die Strahlfangvorrichtung 26 eine runde Öffnung 27 aufweisen sollte, kann ein Teil oder die gesamte runde Öffnungswand 27 mit Sensorelementen 34 besetzt sein.

Die in Figur 1 dargestellte Strahlfangvorrichtung 26 ist aufgrund deren geringer Erstreckung in Y-Richtung bevorzugt in Y-Richtung verfahrbar ausgebildet. Sofern die Strahlfangvorrichtung 26 sich vollständig über die Breite der Werkstückauflage 16 in Y-Richtung erstreckt, kann eine verfahrbare Anordnung in Y-Richtung entfallen.

Während der Bearbeitung des plattenförmigen Materials 12 folgt die Strahlfangvorrichtung 26 der Position des Schneidkopfes 21 beziehungsweise der Schneidkopf 21 und die Strahlfangvorrichtung 26 sind gemeinsam angesteuert, so dass sichergestellt ist, dass die Öffnung 27 der Strahlfangvorrichtung 26 immer unterhalb des Schneidkopfes 21 liegt. Dadurch ist ermöglicht, dass die Detektionsvorrichtung 31 in einer vorbestimmten Position zum Schneidstrahl 22 beziehungsweise zum aus der Unterseite des plattenförmigen Materials 12 austretenden Prozesslicht positioniert wird.

Die Anordnung der Sensorelemente 34 an jeweils einer Seitenkante der Öffnung 27 der Strahlfangvorrichtung 26 ist derart vorgesehen, dass diese gemeinsam in einer Winkellage nur um die X-Achse gedreht geneigt sind, welche den Schneidstrahl 22 kreuzt. Alternativ kann vorgesehen sein, dass alle Sensorelemente auf den Austrittspunkt des Schneidstrahls 22 aus der Unterseite des plattenförmigen Materials 12 ausgerichtet sind. Dabei ist bevorzugt vorgesehen, dass die eine Reihe von Sensorelementen 34 um den Abstand eines halben Sensorelementes versetzt zur gegenüberliegenden Reihe von Sensorelementen 34 vorgesehen ist.

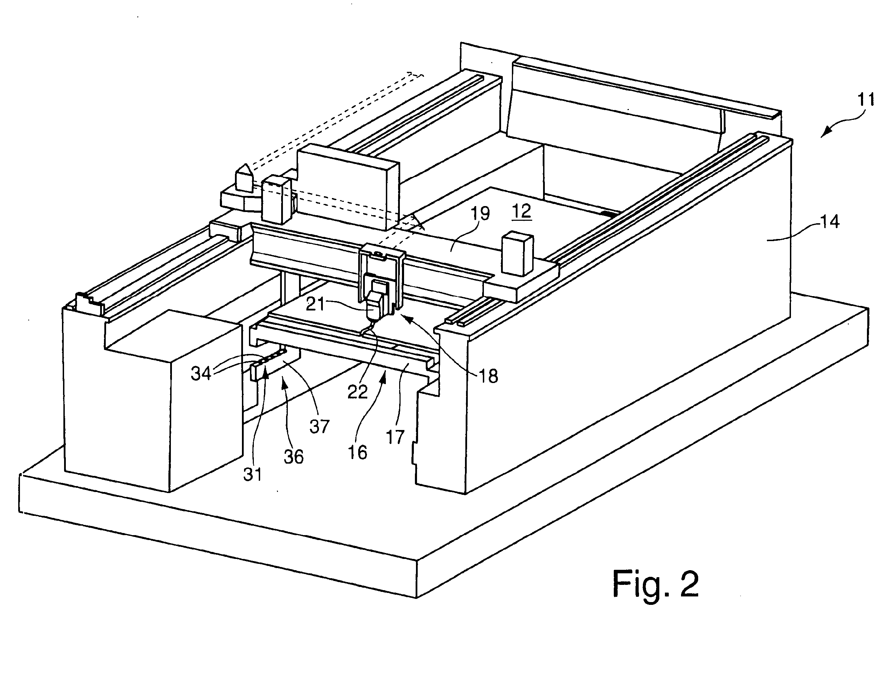

In Figur 2 ist eine alternative Vorrichtung zu Figur 1 dargestellt. Diese Ausführungsform weicht von der Figur 1 und von der Erfindung dahingehend ab, dass anstelle der Strahlfangvorrichtung 26 zumindest ein Träger 36 vorgesehen ist, wobei im Ausführungsbeispiel bevorzugt zwei außerhalb der Werkstückauflage 16 angeordnete Träger 36 vorgesehen sind. Diese Träger 36 sind vorzugsweise unmittelbar mit der Linearachse 19 gekoppelt sind. Alternativ kann vorgesehen sein, dass die Träger 36 einen separaten Antrieb aufweisen, der jedoch synchron mit der Trennvorrichtung 18 bzw. der Linearachse 19 in X-Richtung verfahren wird. Der Träger 36 umfasst einen Querträger 37 zur Aufnahme von mehrerer in Reihe angeordneten Sensorelementen 34, die wiederum zur Unterseite des plattenförmigen Materials 12 ausgerichtet sind. Bei zwei einander gegenüberliegenden Reihen von Sensorelementen 34 ist vorgesehen, dass die Ausrichtung beziehungsweise die Winkellage der Sensorelemente 34 derart vorgesehen ist, dass der Erfassungskegel jedes Sensorelementes 34 den unmittelbar zugeordneten äußeren Randbereich der Werkstückauflage abdeckt sowie zumindest geringfügig über die Mittelachse der Werkstückauflage 16 hinausreicht. Somit kann jeweils eine Hälfte der Breite der Werkstückauflage 16 durch jeweils eine Reihe von Sensorelementen 34 abgedeckt werden. Zusätzlich kann vorgesehen sein, dass die Querträger 37 an den Trägern 36 in Y-Richtung ausfahrbar angeordnet sind.

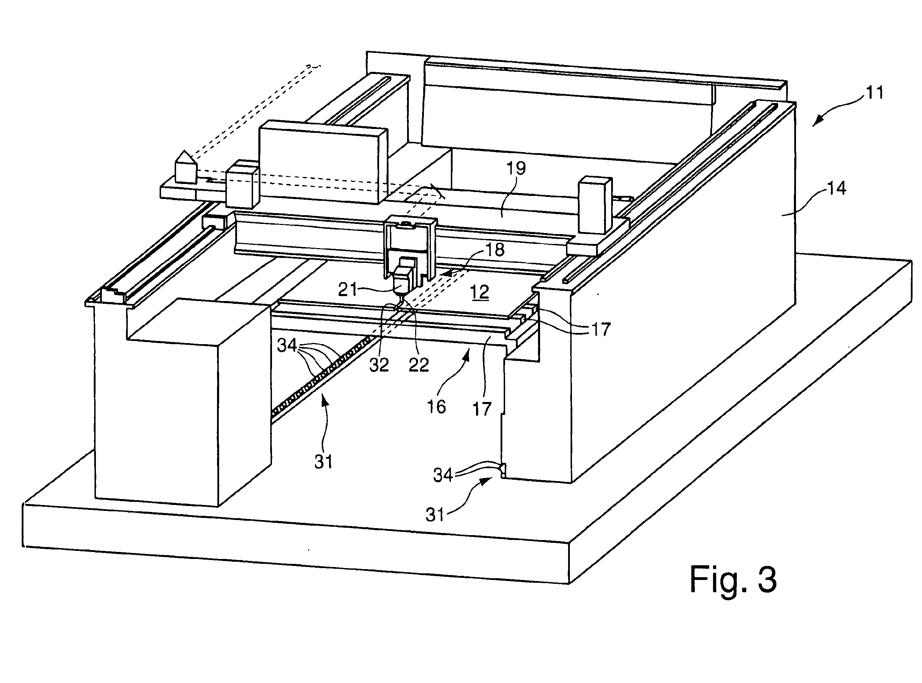

In Figur 3 ist eine weitere Alternative dargestellt, welche von der Erfindung abweicht. Bei dieser Ausführungsform ist abweichend zu den beiden Ausführungsformen gemäß Figur 1 und 2 keine mitfahrende oder verfahrbare Detektorvorrichtung 31 vorgesehen, sondern eine stationäre Detektorvorrichtung 31. Diese stationäre Detektorvorrichtung 31 ist durch zwei einander gegenüberliegenden Reihen von Sensorelementen 34 ausgebildet, welche sich in X-Richtung entlang der Werkstückauflage 16 erstrecken und unterhalb der Werkstückauflage 16 an diese angrenzend oder außerhalb am Grundgestell 14 vorgesehen sind. Auch diese Sensorelemente 34 sind zur Unterseite des plattenförmigen Materials 12 in Analogie zur Anordnung der Sensorelemente 34 gemäß der Detektorvorrichtung 31 in Figur 2 ausgerichtet.

Eine nicht näher dargestellte Alternative der Vorrichtung sieht vor, dass anstelle einer Werkstückauflage 16 zumindest eine Haltevorrichtung vorgesehen ist, welche an einer Oberseite des plattenförmigen Materials angreift und dieses plattenförmige Material mit deren Unterseite freitragend aufnimmt. Die Haltevorrichtung umfasst wenigstens zwei Halteelemente, durch welche das plattenförmige Material in X-Richtung verfahrbar ist. Zwischen den beiden Halteelementen ist ein Abstand vorgesehen, in dem ein Schneidkopf 21 eintauchen kann, der entlang der Y-Richtung verfahrbar ist. Die Haltevorrichtung, welche aus wenigstens zwei Halteelementen besteht, nimmt das plattenförmige Material bevorzugt durch Erzeugung eines Unterdruckes auf. Dadurch kann eine sogenannte Überkopfanordnung geschaffen werden, so dass die Unterseite des plattenförmigen Materials 12 vollständig frei zugänglich ist. Bei dieser Ausführungsform kann sowohl unterhalb des Schneidkopfes 21 eine Strahlfangvorrichtung 26 in Analogie zu Figur 1 vorgesehen sein, welche wiederum bevorzugt die daran angeordnete Detektionsvorrichtung 31 aufnimmt. Alternativ kann ebenso außerhalb der Haltevorrichtung jeweils entlang den Seitenkanten ein Träger 36 vorgesehen sein, der eine Anzahl von Sensorelementen 34 aufnimmt, die vorzugsweise in einer Reihe zueinander angeordnet sind. Darüber hinaus kann eine stationäre Anordnung der Detektionsvorrichtung 31 in Analogie zu Figur 3 vorgesehen sein, wobei abweichend zu Figur 3 nur eine geringe Anzahl von Sensorelementen 34 erforderlich ist, und zwar in Analogie zu Figur 1 und 2, da der Schneidkopf 21 bevorzugt nur in Y-Richtung und nicht in X-Richtung verfahrbar ist. Alternativ kann an einer solchen Überkopfanordnung der Schneidkopf auch in X-Richtung und ggf. in Y-Richtung verfahren werden.

In Figur 4 ist eine schematisch vereinfachte Anordnung einer Detektionsvorrichtung 31 an einer schematisch stark vereinfacht dargestellten Vorrichtung 11 beziehungsweise Laserbearbeitungsmaschine dargestellt. In einem Lasergenerator 41 wird ein Laserstrahl beziehungsweise ein Schneidstrahl 22 erzeugt, der über eine Auskoppeloptik 42 aus dem Lasergenerator 41 ausgekoppelt wird. Über eine schematisch dargestellte Strahlführungseinrichtung 43, welche strichliniert ebenso in den Figuren 1 bis 3 dargestellt ist, wird der Schneidstrahl 22 beispielsweise über eine Strahlumlenkung 44 einem fokussierenden Element 45 zugeführt, durch welches der Schneidstrahl 22 zur Bearbeitungsstelle im plattenförmigen Material 12 geführt ist. Unterhalb des plattenförmigen Materials 12 ist das Sensorelement 34 der Detektionsvorrichtung 31 angeordnet, wobei bei dieser Ausführungsform das Sensorelement 34 zumindest ein Lichtleitelement umfasst, welches unterhalb dem plattenförmigen Material 12 vorgesehen ist und das erfasste Prozesslicht eine Fotodiode oder eine CCD-Kamera weiterleitet. Die Positionierung der Fotodiode und/oder einer CCD-Kamera kann bevorzugt entfernt zum optischen Lichtleiterelement vorgesehen und beispielsweise in einer Auswerteeinheit 46 angeordnet sein. Das Lichtleitelement kann in einer einfachen Ausführungsform als Spiegel ausgebildet sein. Des Weiteren können als Lichtleitelemente Sammelspiegel oder Sammellinsen oder weitere optische Elemente vorgesehen sein, welche eine Erfassung und Weiterleitung des unterhalb des plattenförmigen Materials 12 austretenden Prozesslichtes ermöglichen.

Die in den vorstehenden Beispielen beschriebene Anordnung der Sensorelemente 34, welche beispielhaft für Fotodioden beschrieben ist, gilt auch für die alternative Ausführungsform gemäß Figur 4, wobei anstelle der Fotodioden eine Reihe von Lichtleitelementen in Analogie zu den Fotodioden angeordnet ist. Des Weiteren kann vorgesehen sein, dass auch eine Mischung der vorgenannten Arten der Sensorelemente eingesetzt wird. Beispielsweise kann eine Fotodiode benachbart zu einem Lichtleitelement positioniert werden, wobei das Lichtleitelement das erfasste Prozesslicht an eine entfernt angeordnete und mit dem Lichtleitelement verbundene Fotodiode oder CCD-Kamera oder dergleichen weiterleitet.

Die Auswerteeinrichtung 46, welche bevorzugt eine Komponente der Detektionsvorrichtung 31 bildet, erfasst das Prozesslicht beziehungsweise die daraus gebildeten Signale. Diese Signale werden von der Auswerteeinrichtung ausgewertet und an eine Steuerung 47 der Bearbeitungsmaschine beziehungsweise der Vorrichtung 11 weitergeleitet. Diese Steuerung 47 wiederum steht mit dem Lasergenerator 41 sowie mit weiteren Komponenten der Vorrichtung zu deren Ansteuerung in Verbindung.

Das erfindungsgemäße Verfahren zur Detektion von dem Prozesslicht während dem Trennvorgang des plattenförmigen Materials kann folgendermaßen erfolgen, wobei dies für alle vorbeschriebenen Ausführungsformen gilt.

In einem ersten Schritt für einen Bearbeitungsprozess in einem neu in die Vorrichtung 11 eingelegten plattenförmigen Material 12 oder in einen noch nicht bearbeiteten Bereich des plattenförmigen Materials 12 wird ein Prozessschritt "Einstechen" ausgewählt. Zeitgleich mit diesem Prozessschritt oder während diesem Prozessschritt kann der weitere Prozessschritt "Fehlschnitterkennung" aktiviert werden. Diese Aktivierung bedeutet, dass das zumindest eine Sensorelement 34 der Detektionsvorrichtung 31 ein Signal an eine Auswerteeinrichtung 46 weiterleitet, sobald ein aus der Unterseite des plattenförmigen Materials 12 austretendes Prozesslicht detektiert wird. Gleichzeitig wird zu diesem Zeitpunkt der Prozessschritt des Einstechens beendet. Nach dem Einstechen wird das plattenförmige Material 12 mit dem Schneidstrahl 12 bearbeitet. Die Fehlschnitterkennung ist aktiviert und erfasst, ob ein Prozesslicht aus der Unterseite austritt. In einer einfachsten Ausführungsform des Verfahrens wird durch die Auswerteeinrichtung 46 lediglich erfasst, ob an der Unterseite ein Prozesslicht austritt oder nicht. Sofern kein Prozesslicht austritt, wird durch die Auswerteeinrichtung 46 ein Störungssignal ausgegeben, wodurch die Steuerung 47 den Bearbeitungsvorgang unterbricht. Nach einer weiteren Ausführungsform des Verfahrens kann vorgesehen sein, dass durch die Auswerteeinrichtung 46 die Helligkeitsänderung, die Intensität sowie weitere Parameter des Prozesslichtes erfasst und ausgewertet werden und die dadurch erfassten Daten an die Steuerung 47 weitergeleitet werden, so dass durch die Steuerung 47 eine Prozessregelung während der Bearbeitung des plattenförmigen Materials 12 ermöglicht ist. Somit kann eine optimale Einstellung der Bearbeitungsparameter erfolgen. Durch die unmittelbare Erfassung der zum Zeitpunkt der Bearbeitung vorliegenden Prozessparameter, die sich aus dem sich an der Bearbeitungsstelle austretenden Prozesslicht ableiten lassen, wird eine optimale Prozessüberwachung erzielt.

Bei der Ausführungsform einer verfahrbaren Detektionsvorrichtung 31 unterhalb der Werkstückauflage 16 wird des Weiteren durch die Auswerteeinrichtung 46 berücksichtigt, dass während dem Verfahren Abschattungen durch die Auflagestege 17 stattfinden. Diese werden, sofern diese von beiden Seiten gleichzeitig erfolgen und durch die Sensorelemente 34 erfasst werden, dem Prozesslicht zugeordnet. Sollte diese Zuordnung nicht möglich sein, können solche Schwankungen von gekippten Werkstücken oder dergleichen kommen und ermöglichen eine Qualitätsaussage.

Bei einer Detektionsvorrichtung 31 in Figur 3 ist bevorzugt vorgesehen, dass immer nur eine geringe Anzahl von den in Reihe zueinander angeordneten Sensorelementen 34 aktiviert wird, und zwar diejenige Anzahl von nebeneinander liegenden Sensorelementen 34, welche unterhalb und unmittelbar benachbart zum Schneidkopf 21 liegen, so dass quasi trotz der stationär angeordneten Sensorelemente 34 eine Art mitfahrende Detektionsvorrichtung 31 ausgebildet ist. Diese Ansteuerung kann durch die Auswerteeinrichtung 46 erfolgen, welche die entsprechende Anzahl von Sensorelementen 34 aktiviert und/oder abfrägt.

Zusätzlich ist vorgesehen, dass in zeitlichen Abständen eine Rekalibration der Detektionsvorrichtung 31 aufgrund von Verschmutzung mittels der Ermittlung eines Deltawertes beim Anschalten einer zusätzlichen Lichtquelle erfolgt.

Des Weiteren kann vorgesehen sein, dass die Sensorelemente 34 einen Schutz vor Verschmutzungen aufweisen. Dies kann beispielsweise durch ein Sichtrohr vorgesehen sein.

## Patentansprüche

1. Verfahren zur Detektion von einem Prozesslicht während eines Trennvorganges im plattenförmigen Material (12), der mit einem Schneidstrahl (22) einer Trenneinrichtung (18) erzeugt wird,
- bei dem der Schneidstrahl (22) der Trenneinrichtung (18) auf e ne Oberseite des plattenförmigen Materials (12) gerichtet wird, der nach der Erzeugung eines Schneidspaltes (32) aus der Unterseite des plattenförmigen Materials austritt,
- bei dem das während dem Schneidvorgang aus der Unterseite des plattenförmigen Materials (12) austretende Prozesslicht durch eine unterhalb des plattenförmigen Materials (12) angeordnete Detektionsvorrichtung (31) erfasst wird, **dadurch gekennzeichnet,**
- **dass** die Trenneinrichtung (18) während des Trennvorganges zumindest in X- oder Y-Richtung verfahren wird,
- **dass** der Trenneinrichtung (18) eine Strahlfangvorrichtung (26) unterhalb des plattenförmigen Materials (12) zugeordnet wird, welche eine Detektionsvorrichtung (31) aufnimmt,
- **dass** die Strahlfangvorrichtung (26) zumindest in X-Richtung gemeinsam mit der Trennvorrichtung (18) verfahren wird und
- **dass** das aus der Unterseite austretenden Prozesslicht durch eine Aktivierung der Detektionsvorrichtung (31) erfasst wird.

2. Verfahren nach Anspruch 1, **dadurch gekennzeichnet, dass** die Strahlfangvorrichtung (26), welche sich nur teilweise in Y-Richtung erstreckt, gemeinsam mit der Trenneinrichtung (18) in Y-Richtung verfahren wird.

3. Verfahren nach einem der vorhergehenden Ansprüche, **dadurch gekennzeichnet, dass** die Detektionsvorrichtung (31) zumindest ein Sensorelement (34) umfasst, welche zur Erfassung des Prozesslichtes n eine auf die Unterseite des plattenförmigen Materials (12) weisenden Position ausgerichtet wird.

4. Verfahren nach einem der vorhergehenden Ansprüche, **dadurch gekennzeichnet, dass** die Unterseite des plattenförmigen Materials (12) durch zumindest zwei einander gegenüberliegende Sensorelemente (34) erfasst wird, die vorzugsweise derart zueinander ausgerichtet werden, dass die jeweiligen Erfassungskegel der Sensorelemente (34) aneinandergrenzen oder dass ein Überlappungsberefch entlang einer Längsmittelachse der Werkstückauflage (16) gebildet wird.

5. Verfahren nach einem der vorhergehenden Ansprüche, **dadurch gekennzeichnet, dass** durch mehrere in Reihe angeordnete und einander gegenüberliegende Sensorelemente (34) ein Detektionsfeld ausgebildet wird und durch jede Reihe der Sensorelemente (34) zumindest eine Hälfte der Unterseite von den Erfassungskegeln dieser Sensorelemente (34) abgedeckt wird.

6. Verfahren nach einem der vorhergehenden Ansprüche, **dadurch gekennzeichnet, dass** eine Reihe von Sensorelementen (34) in einem halben Abstand des Sensorelementes (34) versetzt zur gegenüberliegenden Reihe von Sensorelementen (34) angeordnet wird.

7. Verfahren nach einem der vorhergehenden Ansprüche, **dadurch gekennzeichnet, dass** mit einem Beginn oder während eines Prozessschrittes zum Einstechen des Schneidstrahls (22) in das plattenf irmige Material (12) das zumindest eine Sensorelement (34) der Detektionsvorrichtung (31) aktiviert wird und bei erstmaligem Erfassen eines Prozesslichtes auf der Unterseite des plattenförmigen Materials (12) eine Auswerteeinrichtung (46) das Ende des Prozessschrittes "Einstechen" ermittelt.

8. Verfahren nach einem der vorhergehenden Ansprüche, **dadurch gekennzeichnet, dass** während des Schneidprozesses zur Herstellung von Werkstücken aus dem plattenförmigen Material (12) das auf der Unterseite des plattenförmigen Materials (12) austretende Prozesslicht detektiert wird, durch eine Auswerteeinrichtung (46) ausgewertet und bei einer Unterschreitung eines Schwellwertes in der Helligkeit des Prozesslichtes eine Fehlermeldung ausgegeben wird.

9. Verfahren nach einem der vorhergehenden Ansprüche, **dadurch gekennzeichnet, dass** während des Schneidprozesses zur Herstellung von Werkstücken aus dem plattenförmigen Material (12) das auf der Unterseite des plattenförmigen Materials (12) austretende Prozesslicht detektiert und durch eine Auswerteeinrichtung (46) eine Intensität und/oder ein zeitlicher Verlauf des austretenden Prozesslichtes ermittelt wird.

10. Verfahren nach einem der vorhergehenden Ansprüche, **dadurch gekennzeichnet, dass** während des Schneidprozesses zur Herstellung von Werkstücken aus dem plattenförmigen Material (12) das auf der Unterseite des plattenförmigen Materials (12) austretende Prozesslicht detektiert sowie durch eine Auswerteeinrichtung (46) ausgewertet wird und dass die durch die Auswerteeinrichtung (46) ermittelten Signale an eine Steuerung (47) der Vorrichtung (11) zur Prozessregelung weitergeleitet werden.

11. Verfahren nach einem der Ansprüche 1 bis 4, **dadurch gekennzeichnet, dass** durch die verfahrbar angeordnete Detektionsvorrichtung (31) während des Verfahrweges in X-Richtung aufgrund von Auflagestegen (17) der Werkstückauflage (16) resultierende Helligkeitsänderungen erfasst und bei der Auswertung eliminiert werden.

12. Vorrichtung zur Aufnahme von plattenförmigem Material (12) für zumindest einen Trennvorgahg im plattenförmigen Material (12) zur Durchführung des Verfahrens nach einem der Ansprüche 1 bis 11, mit einer Trenneinrichtung (18), durch die ein Schneidstrahl (22) auf eine Oberseite des plattenförmigen Materials (12) gerichtet ist, der nach der Erzeugung eines Schneidspaltes (32) aus der Unterseite des plattenförmigen Materials (12) austritt und mit einer Detektionsvorrichtung (31), die zur Unterseite des plattenförmigen Materials für die Erfassung eines aus der Unterseite austretenden Prozesslichtes ausgerichtet ist, **dadurch gekennzeichnet, dass** die Trenneinrichtung (18) zumindest in X-Richtung verfahrbar ist, dass der Trenneinrichtung (18) eine Strahlfangvorrichtung (26) unterhalb des plattenförmigen Materials (12) zugeordnet wird, welche eine Detektionsvorrichtung (31) aufnimmt, - dass die Strahlfangvorrichtung (26) zumindest in X-Richtung gemeinsam mit der Trennvorrichtung (18) verfahren wird und dass ein sich in der Position des plattenförmigen Materials (12) veränderndes und nach unten austretendes Prozesslicht durch eine Aktivierung der an einer Strahlfangvorrichtung (26) angeordneten Detektionsvorrichtung (31) erfassbar ist.

## Claims

1. A method for detecting a process light during a separation process in the plate-like material (12) produced by a cutting beam (22) of a separating device (18),
- in which the cutting beam (22) of the separating device (18) is directed at a top surface of the plate-like material (12) and, after having created a cutting gap (32), exits from the bottom surface of the plate-like material,
- in which the process light exiting from the bottom surface of the plate-like material (12) during the cutting process is detected by a detection device (31) arranged beneath the plate-like material (12), **characterised in that**
- during the separation process, the separating device (18) is moved at least in the x direction or in the y direction,
- a beam capturing device (26) accommodating a detection device (31) is associated with the separating device (18) beneath the plate-like material (12),
- said beam capturing device (26) is moved, at least in the x direction, together with the separating device (18), and
- the process light exiting from the bottom surface is detected through an activation of the detection device (31).

2. The method as claimed in claim 1, **characterised in that** the beam capturing device (26), which extends only partially in the y direction, is moved in the y direction together with the separating device (18).

3. The method as claimed in any of the preceding claims, **characterised in that** the detection device (31) comprises at least one sensing element (34) which is oriented in a position pointing toward the bottom surface of the plate-like material (12) so as to detect the process light.

4. The method as claimed in any of the preceding claims, **characterised in that** the bottom surface of the plate-like material (12) is covered by at least two sensing elements (34) arranged opposite each other which are preferably oriented with respect to each other in such a way that the respective coverage cones of the sensing elements (34) adjoin one another or that an overlap region is formed along a longitudinal central axis of the workpiece support (16).

5. The method as claimed in any of the preceding claims, **characterised in that** a detection field is formed by a plurality of sensing elements (34) arranged in rows and disposed opposite one another and that for each row of sensing elements (34) at least one half of the bottom surface is covered by the coverage cones of the respective sensing elements (34).

6. The method as claimed in any of the preceding claims, **characterised in that** one row of sensing elements (34) is arranged relative to the opposite row of sensing elements (34) with an offset of half the distance between two sensing elements (34).

7. The method as claimed in any of the preceding claims, **characterised in that** the at least one sensing element (34) of the detection device (31) is activated at the beginning, or in the course, of a process step comprising the initial incisive action of the cutting beam (22) on the plate-like material (12), and that upon first detection of a process light on the bottom surface of the plate-like material (12) an evaluation apparatus (46) determines the end of said process step of "initial incision".

8. The method as claimed in any of the preceding claims, **characterised in that** during the cutting process for fabricating workpieces from the plate-like material (12) the process light exiting from the bottom surface of the plate-like material (12) is detected and evaluated by an evaluation apparatus (46), and that an error message is output if the brightness of the process light is inferior to a given threshold value.

9. The method as claimed in any of the preceding claims, **characterised in that** during the cutting process for fabricating workpieces from the plate-like material (12), the process light exiting from the bottom surface of the plate-like material (12) is detected, and that an intensity and/or a variation in time of the exiting process light is determined by an evaluation apparatus (46).

10. The method as claimed in any of the preceding claims, **characterised in that** during the cutting process for fabricating workpieces from the plate-like material (12), the process light exiting from the bottom surface of the plate-like material (12) is detected and is evaluated by an evaluation apparatus (46), and that, for process controlling purposes, the signals determined by the evaluation apparatus (46) are transmitted to a control unit (47) of the device (11).

11. The method as claimed in any one of claims 1 to 4, **characterised in that** variations in brightness occurring during the travel path in the x direction and resulting from support lands (17) of the workpiece support (16) are detected by the movably arranged detection device (31) and eliminated in the course of the evaluation process.

12. A device for holding plate-like material (12) for at least one separation process in the plate-like material (12), with the aim of carrying out the method as claimed in any one of claims 1 to 11, said device having a separating device (18) by which a cutting beam (22) is directed at a top surface of the plate-like material (12) and, after having created a cutting gap (32), exits from the bottom surface of the plate-like material (12), and a detection device (31) that is oriented toward the bottom surface of the plate-like material (12) for detecting a process light exiting from said bottom surface, **characterised in that**
- the separating device (18) is movable at least in the x direction,
- a beam capturing device (26) accommodating a detection device (31) is associated with the separating device (18) beneath the plate-like material (12),
- said beam capturing device (26) is moved, at least in the x direction, together with the separating device (18), and
- a process light, which changes its position on the plate-like material (12) and exits in a downward direction, is detectable by an activation of the detection device (31) that is disposed on a beam capturing device (26).

## Revendications

1. Procédé destiné à détecter une lumière de processus pendant une opération de séparation effectuée dans le matériau (12) en forme de plaque, laquelle est réalisée avec un jet de coupe (22) d'un système de séparation (18),
- lors duquel le jet de coupe (22) du système de séparation (18) est dirigé vers une face supérieure du matériau (12) en forme de plaque et sort, après la réalisation d'un jeu de coupe (32), de la face inférieure du matériau en forme de plaque,
- lors duquel la lumière de processus sortant, pendant l'opération de coupe, de la face inférieure du matériau (12) en forme de plaque est saisie par un dispositif de détection (31) disposé sous le matériau (12) en forme de plaque, **caractérisé en ce que**
- le système de séparation (18) est déplacé pendant l'opération de séparation au moins en direction x ou y,
- un dispositif de capture de jet (26) qui est situé sous le matériau (12) en forme de plaque est affecté au système de séparation (18) et contient un dispositif de détection (31),
- le dispositif de capture de jet (26) est déplacé au moins en direction x ensemble avec le système de séparation (18) et
- la lumière de processus sortant de la face inférieure est saisie par une activation du dispositif de détection (31).

2. Procédé selon la revendication 1, **caractérisé en ce que** le dispositif de capture de jet (26) qui s'étend seulement partiellement en direction y est déplacé ensemble avec le système de séparation (18) en direction y.

3. Procédé selon l'une quelconque des revendications précédentes, **caractérisé en ce que** le dispositif de détection (31) comprend au moins un élément capteur (34) qui, pour saisir la lumière de processus, est orienté selon une position montrant vers la face inférieure du matériau (12) en forme de plaque.

4. Procédé selon l'une quelconque des revendications précédentes, **caractérisé en ce que** la face inférieure du matériau (12) en forme de plaque est saisie par au moins deux éléments capteurs (34) situés en regard lesquels sont de préférence orientés l'un par rapport à l'autre de manière que les cônes de saisie respectifs des éléments capteurs (34) soient contigus ou de manière à ce que soit formée une zone de chevauchement le long d'un axe central longitudinal du porte-pièce (16).

5. Procédé selon l'une quelconque des revendications précédentes, **caractérisé en ce qu'**un champ de détection est formé par plusieurs éléments capteurs (34) disposés en rangée et situés en regard les uns des autres et **en ce que**, grâce à chaque rangée des éléments capteurs (34), au moins une moitié de la face inférieure est couverte par les cônes de saisie desdits éléments capteurs (34).

6. Procédé selon l'une quelconque des revendications précédentes, **caractérisé en ce qu'**une rangée d'éléments capteurs (34) est décalée de la moitié de l'espacement entre éléments capteurs (34) par rapport à la rangée d'éléments capteurs (34) opposée.

7. Procédé selon l'une quelconque des revendications précédentes, **caractérisé en ce que** dès le début ou pendant le déroulement d'une étape de processus en vue du percage du matériau (12) en forme de plaque par le jet de coupe (22), ledit au moins un élément capteur (34) du dispositif de détection (31) est activé et que lors de la première saisie d'une lumière de processus sur la face inférieure du matériau (12) en forme de plaque, un dispositif d'évaluation (46) détermine la fin de l'étape de processus "percage".

8. Procédé selon l'une quelconque des revendications précédentes, **caractérisé en ce que**, pendant l'opération de coupe pour la fabrication de pièces à usiner à partir du matériau (12) en forme de plaque, la lumière de processus sortant de la face inférieure du matériau (12) en forme de plaque est détectée, est évaluée par un dispositif d'évaluation (46) et qu'un message d'erreur est émis si la luminosité de la lumière de processus est en dessous d'une valeur de seuil donnée.

9. Procédé selon l'une quelconque des revendications précédentes, **caractérisé en ce que**, pendant l'opération de coupe pour la fabrication de pièces à usiner à partir du matériau (12) en forme de plaque, la lumière de processus sortant de la face inférieure du matériau (12) en forme de plaque est détectée et qu'une intensité et/ou une variation temporelle de la lumière de processus qui sort est déterminée.

10. Procédé selon l'une quelconque des revendications précédentes, **caractérisé en ce que**, pendant l'opération de coupe pour la fabrication de pièces à usiner à partir du matériau (12) en forme de plaque, la lumière de processus sortant de la face inférieure du matériau (12) en forme de plaque est détectée, puis évaluée par un dispositif d'évaluation (46) et **en ce que** les signaux déterminés par le dispositif d'évaluation (46) sont transmis, pour le réglage de processus, à une commande (47) du dispositif (11).

11. Procédé selon l'une quelconque des revendications 1 à 4, **caractérisé en ce que** les changements de luminosité causés par des barres de support (17) du porte-pièce (16) sont saisis par le dispositif de détection (31) disposé de manière déplaçable pendant le déplacement en direction x et sont éliminés lors de l'évaluation.

12. Dispositif destiné à recevoir un matériau (12) en forme de plaque pour au moins une opération de séparation effectuée dans le matériau (12) en forme de plaque pour mettre en oeuvre le procédé selon l'une quelconque des revendications 1 à 11, avec un système de séparation (18) qui dirige sur une face supérieure du matériau (12) en forme de plaque un jet de coupe (22) qui sort, après la réalisation du jeu de coupe (32), de la face inférieure du matériau (12) en forme de plaque, et avec un dispositif de détection (31) qui est orienté vers la face inférieure du matériau en forme de plaque en vue de saisir une lumière de processus sortant de ladite face inférieure, **caractérisé en ce que**
- le système de séparation (18) peut se déplacer au moins en direction x,
- un dispositif de capture de jet (26) qui est situé sous le matériau (12) en forme de plaque est affecté au système de séparation (18) et contient un dispositif de détection (31),
- le dispositif de capture de jet (26) est déplacé au moins en direction x ensemble avec le système de séparation (18) et
- une lumière de processus modifiant sa position dans le matériau (12) en forme de plaque et sortant vers le bas peut être saisie par une activation du dispositif de détection (31) disposé sur un dispositif de capture de jet (26).
